# EUROPEAN PATENT APPLICATION

(11) **EP 1 472 964 A2**
(43) Date of publication of application: **03.11.2004**
(21) Application number: 04076273.4
(22) Date of filing: 29.04.2004
(51) Int. Cl.: A47J 37/04

(54) **Device and method for heating pieces of food, and packed pieces of food for use with this method**

(30) Priority: 02.05.2003 NL 1023325
(71) Applicant: Swilion B.V., 2140 AA Vijfhuizen (NL)
(72) Inventor: Oosterling, Pieter Adriaan, 4508 KC Ijzendijke (NL)
(74) Representative: Uittenbogaart, G. A.

(57) **Abstract**

The invention relates to a device and a method for heating pieces of food (6), and also relates to packed pieces of food (6) for use with the method. Pieces of food (6) are heated in the device in a pan or basket (3) which can be rotated about a non-vertical axis of rotation. By connecting the pan or basket (3) to the device, the filling opening of the pan or basket (3) is closed. In a smallest cross section (K) the pieces of food (6) to be heated are at a distance of at maximum 7 mm from the envelope (O) of the smallest cross section.

## Description

The invention relates to a device according to the preamble of Claim 1. Such a device is known from WO 9711628. The disadvantage of the known device is that too many operations are necessary for closing and opening the pan or basket, which makes placing pieces of food in the pan or basket and removing them from the pan or basket again too complicated, and makes domestic use difficult.

In order to avoid this disadvantage, the device is designed according to the characterizing part of Claim 1. This makes it possible for the user in one operation to connect the pan or basket to the rotating means and close the pan or basket at the same time, so that the pieces of food stay in the pan or basket during rotation. Use of the device is simplified as a result.

According to an improvement, the device is designed according to Claim 2. A compact device that is simple to operate is achieved in this way.

According to a further improvement, the device is designed according to Claim 3. As a result of this, the pieces of food can be heated in a simple manner and without the addition of fat, while the blades that may be present interrupt the sliding of said pieces of food along the inside of the pan and move the pieces relative to each other and to the bottom.

According to a further improvement, the device is designed according to Claim 4. As a result of this, the pieces of food can slide along the wall of the pan and rotate without any problems, and the pan can be cleaned in a simple manner.

According to a further improvement, the device is designed according to Claim 5. As a result of this, the user can also disconnect the pan or basket from the housing without difficulty or aids after heating of the pieces of food.

According to a further improvement, the device is designed according to Claim 6. As a result of this, it is ensured in a simple manner that the food is mixed well during the heating, with the result that the heat is also distributed better over all the pieces of food.

The invention also relates to a method according to the preamble of Claim 7 or 8. Such a method is known, inter alia, from WO 9711628. The disadvantage of the known method is that the heated pieces of food are not always sufficiently cooked through, because the heat cannot penetrate sufficiently deeply in the time that is available for heating up the food. Extending the heating time would mean that the parts near the surface of the food could burn, which is undesirable. In order to avoid this disadvantage in the case of pieces of food with irregular dimensions, such as pieces of food cut into long strips, the method is carried out according to the characterizing part of Claim 7. In order to avoid this disadvantage in the case of pieces of food with cross sections that are of more or less equal size in various cuts and in various directions, the method is carried out according to the characterizing part of Claim 8. This ensures that the inside of the pieces of food are also sufficiently cooked through without burning, charring or other loss of flavour occurring as a result of overheating in parts of the pieces of food near the surface.

According to an improvement, the method is carried out according to Claim 9. This ensures that pieces of food that may be radiated from two sides are sufficiently thick and that loss of flavour as a result of overheating is avoided.

According to a further improvement, the method is carried out according to Claim 10. Through the use of the rotating basket or pan, the pieces of food can be heated on all sides in a simple manner, while limiting the size of the pieces of food ensures that in the basket or pan they move relative to the basket or pan and relative to each other.

According to a further improvement, the method is carried out according to Claim 11. This ensures in a simple manner that during the heating process the pieces of food are heated additionally in places and possibly acquire crispness on the outside, which leads to an improvement in flavour.

The invention also relates to packed and possibly preserved pieces of food according to the preamble of Claim 12. It is known to pack pieces of food and possibly preserve them. The known pieces of food are, however, in many different sizes, with thick and thin pieces being mixed in a pack, so that during heating in a pan or basket with an infrared radiation source the pieces that are too thin will undergo an undesirable change in taste through overheating. In order to produce an improvement in this respect, the packed pieces of food are sorted, selected, cut and/or otherwise processed according to the characterizing part of Claim 12. As a result of this, the packed pieces of food can be used without further processing when heating with an infrared radiation source without undesirable changes in taste occurring during the heating process.

The invention is explained below with reference to a number of exemplary embodiments by means of a drawing, in which:
Figure 1 shows a diagrammatic cross section of a first embodiment of a heating device for heating pieces of food;
Figure 2 shows a diagrammatic cross section of a second embodiment of a heating device for heating pieces of food;
Figure 3 shows a diagrammatic cross section of a second embodiment of a pan for use with the heating device according to Figure 1; and
Figure 4 shows diagrammatic views and cross sections of pieces of food suitable for heating in the device according to Figure 1.

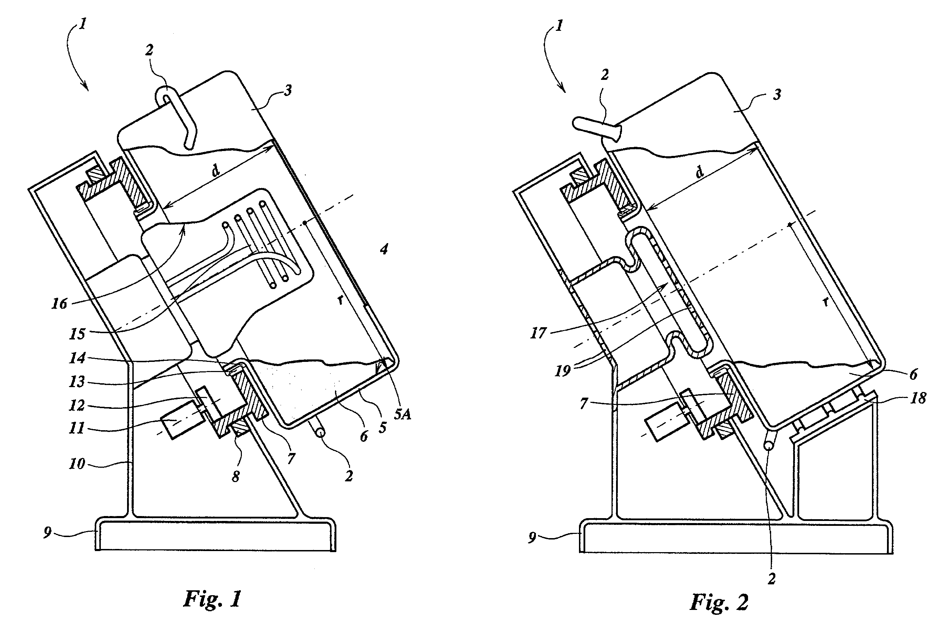

Figure 1 shows a heating device 1 for food. The heating device 1 comprises a base 9 supporting a housing 10, in which a ring 7 is rotatably mounted in a bearing 8. The ring 7 is driven by a motor 11 by means of a drive wheel 12. The axis of rotation of the ring 7 forms an angle with the vertical. A pan 3 can be connected to the ring 7, preferably by an edge of a filling opening of the pan 3, it being possible if desired to provide the ring 7 with spring-loaded elements (not shown) for clamping the pan 3. The pan 3 has a frying surface 5A, which in the embodiment shown in Figure 1 comprises a U-shaped ring 5, in the case of which pieces of food 6 rest against the surface of the ring 5 on the inside. On the side facing away from the housing 10, the pan 3 has an opening 4, which is preferably closed off by wire mesh. It is, of course, also possible for the pan 3 to be fully closed on the side facing away from the housing, as shown in Figure 2, and for the pan to have a smooth bottom.

On the side clamped against the ring 7 the pan 3 has an opening through which a heating element 15 projects into the pan. A cap 16 is fitted around the heating element 15. The cap 16 is made of wire material, so that said cap does not interfere with transfer of heat and ensures that pieces of food 6 do not come into contact with the heating element 15, and at the same time it closes the filling opening of the pan 3. On the side facing the ring 7, the edge of the pan 3 is provided with lugs 14, which engage with notches 13 in the ring 7, so that the pan 3 rotates with the ring 7. The pan 3 is provided with handles 2 on the outside of the U-shaped ring 5. The frying surface 5a may, if desired, be provided with an anti-stick coating. The material of the pan 3 can be metal or even glass, through which the user can follow the frying process.

In order to be put into use, the pan 3 is removed from the holder 10 and filled with pieces of food 6 through the filling opening. The pieces of food 6 are placed on the bottom of the pan 3 or, if present, on the wire mesh in the opening 4. The holes in the wire mesh are selected in such a way here that small pieces of food 6 fall through the wire mesh, do not remain in the pan 3 and are not heated with the other food, so that these small pieces are prevented from spoiling the flavour by burning. The pan 3 is connected to the ring 7, and the cap 16 closes the filling opening.

Owing to the tilted position of the pan 3, the pieces of food 6 rest on the underside against the frying surface 5A of ring 5. The heating device 1 is then switched on by activation of the motor 11 and the heating element 15.

After switching on, the heating element 15 transmits infrared radiation, which directly heats the pieces of food 6, and which also heats the U-shaped ring 5, so that the pieces of food 6 are also heated by the frying surface 5A.

For heating the pieces of food 6 by infrared radiation, the temperature of the heating element 15 is preferably more than 350° Celsius. The heating element 15 may also, if desired, be provided with a fan, by means of which the heating element 15 blows heated air towards the pieces of food 6. An advantage of the chosen method of heating is that the pieces of food 6 are permanently in motion, so that they do not stick to the pan 3, and also that the heat of the infrared radiation acts upon constantly changing surfaces of the pieces of food 6. It is therefore not necessary during the heating and/or cooking of the pieces of food to add fat in order to prevent sticking or burning, so that the pieces of food 6 heated and/or cooked with the heating device 1 have no added fat and are therefore very suitable for low-fat diets.

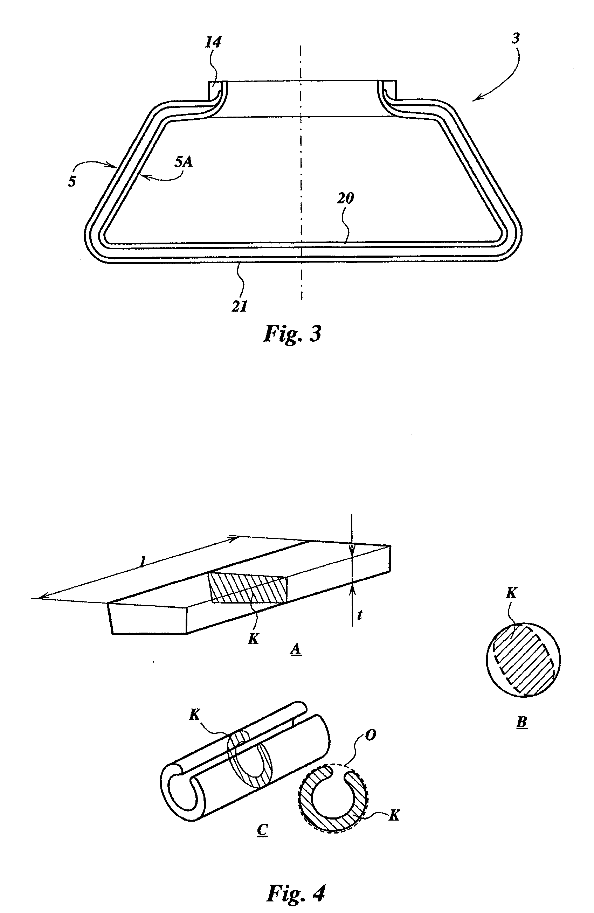

The heating device 1 can be switched on in the known way, for example with switches for the motor 11 and the heating element 15, it being preferably not possible to switch on the heating element 15 when the motor 11 is off. There may be time switches for setting the duration for which the device is switched on and/or the time at which it is switched on. The opening 4 makes it possible for the user to follow the heating and/or cooking process and for released vapours to escape. It is also possible to add herbs through the opening 4 during the preparation, or pieces of food can be added without the pan 3 having to be disconnected from the ring 7. In this case the wire mesh in the opening 4, if it is present, is removable. It will be clear that the largest size of the pieces of food 6 to be heated in the pan 3 must be limited, in order to ensure that the pieces of food 6 move sufficiently relative to each other and to the pan 3 during the rotation of the pan 3. It has been found adequate here if the greatest length 1 of the pieces of food (see Figure 4) is less than a radius r and/or a depth d of pan 3.

Figure 2 shows an alternative embodiment of the heating device 1, in which a gas burner 18 is used instead of a heating element 15 with infrared radiation, the gas burner 18 heating the outside of the pan 3 and in particular the U-shaped ring 5. A guide plate 17 is provided in the housing 10 for the purpose of closing the filling opening of the pan 3. The handle 2 is placed in such a way that it is not heated by the gas burner 18 during rotation of the pan 3. It will be clear that the heating of the pieces of food 6 here is carried out in a more traditional way. Through the uninterrupted rotation of the pan and the fact that the pieces of food 6 roll over one another, the local heating will remain limited and the use of fat during the heating can be kept to a minimum here also. In the embodiment shown in Figure 2 the bottom of the pan 3 is closed and for the removal of vapours occurring in the pan 3 during the heating the housing 10 and the guide plate 17 are provided with venting apertures 19.

In the exemplary embodiments shown above a pan 3 is shown with a U-shaped ring 5 with a frying surface 5A. Owing to the fact that in the case of use of heating by infrared radiation and possibly hot air no fat is added during the heating, an open basket can also be used instead of the pan with the closed U-shaped ring 5. If desired, the housing 10 may then be placed in a closable cover, in order to improve heat and to avoid the spread of hot material.

Figure 3 shows a pan 3 for use with the heating device 1 as shown in Figure 1, possibly in combination with the venting apertures 19. The pan 3 has an outside wall 21 and an inside wall 20, the outside wall 21 being designed in such a way that said wall remains cool when the inside wall 20 is heated by the heating element 15. To this end, the pan 3 can be made of a double-walled design, for example of stainless steel plate. In another embodiment only the inside wall 20 is made of stainless steel plate, and the outside wall 21 is made of insulating material such as a plastic that is resistant to heat from the inside wall. The shape of this embodiment of the pan 3 is such that the outer circumference corresponding to the U-shaped ring 5 is of a conical shape, so that during rotation of the pan 3 about the non-vertical axis of rotation the pieces of food 6 lying on the frying surface 5A are moving at different speeds relative to each other and a better mixing of the pieces of food 6 in the pan occurs. The mixing of the pieces of food 6 during rotation may possibly be further improved by providing blades (not shown) on the inside wall 20 of the pan 3 along the frying surface 5A.

Figure 4 shows pieces of food 6, cross sections K of the material to be heated being indicated by hatching. The pieces of food 6 are cut, selected or otherwise processed before being heated in the pan 3, so that the pieces of food have such dimensions that loss of flavour through overheating and/or burning is avoided. Using pieces of food 6 of more or less homogenous size means that during the fatless heating with infrared radiation the radiation can penetrate into the whole food and ensure that the food is adequately cooked through without overheating occurring. It has been found here that the smallest cross section K of a processed piece of food is decisive for the proper functioning of the infrared radiation. The food will be cooked through properly if the distance from the surface to be radiated is no more than 7 mm, the distance between two surfaces t lying opposite each other preferably not exceeding 7 mm. In the case of spherical or virtually spherical pieces of food this distance can be greater and the food will still be properly cooked through if the distance from the surface to be radiated is no more than 12 mm.

In order to promote the use of the device, the food prepared according to the method described above is packed, possibly after being quick frozen, and is offered in packed form in the shops. It is preferably ensured that the pieces of food 6 consisting of different raw materials in the same pack have the same length of preparation time, for example by blanching some meal components or pretreating them in another way.

## Claims

1. Device for heating pieces of food (6), comprising a housing (10) with rotation means (7, 11, 12) for the rotation of a pan or basket (3) about a non-vertical axis, a heating element (15; 18) for heating the pieces of food present in the pan or basket, and connecting means (13, 14) for connecting the pan or basket to the rotation means, the pan or basket having a filling opening for putting in the pieces of food, and having closing means (16; 17) for closing the filling opening, **characterized in that** the closing means (16; 17) close the filling opening by connecting the pan or basket (3) to the rotation means (7, 11, 12).

2. Device according to Claim 1, in which the heating element (15) is enclosed by a cap (16) and the cap forms part of the closing means (16; 17).

3. Device according to Claim 1 or 2, in which the heating element (15) is an infrared radiation source with a temperature of at least 350° Celsius.

4. Device according to Claim 1, 2 or 3, in which the pan or basket (3) is designed with a smooth inside (20), possibly provided with blades.

5. Device according to one of the preceding claims, in which the pan or basket (3) is designed with an insulating outside (21).

6. Device according to one of the preceding claims, in which the outer periphery of the pan or basket (3) is conical.

7. Method for heating pieces of food (6) by moving a pan or basket (3) in such a way that the pieces of food are moved along an inside (20) of the pan or basket, and by heating the pieces of food with infrared radiation coming from a radiation source (15) with a temperature of at least 350° Celsius, and possibly also blowing hot air along the pieces of food, **characterized in that**, prior to heating, the pieces of food (6) are sorted, selected, cut and/or otherwise processed in such a way that in a smallest cross section (K) of the pieces of food the parts to be heated are at a distance of less than 7 mm from the envelope (O) of the smallest cross section.

8. Method for heating pieces of food by moving a pan or basket (3) in such a way that the pieces of food are moved along an inside (20) of the pan or basket, and by heating the pieces of food with infrared radiation produced by a radiation source (15) with a temperature of at least 350° Celsius, and possibly also blowing hot air along the pieces of food, **characterized in that**, prior to heating, the pieces of food (6) are sorted, selected, cut and/or otherwise processed in such a way that the various cross sections of the pieces of food are of approximately the same size, and that in a cross section of the pieces of food the parts to be heated are at a distance of less than 12 mm from the envelope (O) of a cross section.

9. Method according to Claim 7 or 8, in which the pieces of food are sorted, selected, cut and/or otherwise processed in such a way that the shortest distance (t) between two opposite external surfaces of a piece of food is not less than the maximum distance from the envelope of the smallest cross section of the piece of food.

10. Method according to one of Claims 7 - 9, in which the pieces of food (6) are heated in a basket or pan (3) by rotating said basket or pan about a non-vertical axis, and in which the basket or pan has a radius (r) and a depth (d), and the greatest length (1) of a piece of food is less than the radius and/or the depth.

11. Method according to one of Claims 7 - 10, in which the basket or pan (3) has on the outer periphery a plate-shaped surface (5A) which is heated to a frying temperature by a gas burner (18).

12. Packed and possibly preserved pieces of food, **characterized in that** the pieces of food are sorted, selected, cut and/or otherwise processed in such a way
